# EUROPEAN PATENT APPLICATION

(11) **EP 3 599 581 A1**
(43) Date of publication of application: **29.01.2020**
(21) Application number: 19185134.4
(22) Date of filing: 09.07.2019
(51) Int. Cl.: G06Q 30/02, G06Q 30/06

(54) **METHOD AND APPARATUS FOR DISPLAYING A COMMODITY**

(30) Priority: 25.07.2018 CN 201810828162
(71) Applicant: Beijing Xiaomi Mobile Software Co., Ltd., Beijing 100085 (CN)
(72) Inventor: XIE, Yan, Beijing, Beijing 100085 (CN)
(74) Representative: dompatent von Kreisler Selting Werner - Partnerschaft von Patent- und Rechtsanwälten mbB

(57) **Abstract**

The present disclosure relates to a method and an apparatus for displaying a commodity. The method includes: determining whether a positional relationship between a display terminal and a user terminal satisfies a predetermined condition; when the positional relationship satisfies the predetermined condition, acquiring purchase intention information of the user terminal, the purchase intention information including a commodity identifier of each of at least one commodity that a user intends to purchase; and displaying the at least one commodity based on the purchase intention information.

## Description

### TECHNICAL FIELD

The present disclosure relates to a field of terminal control technologies, and more particularly, to a method and an apparatus for displaying a commodity.

### BACKGROUND

As productivity increases, many commodities may be produced. These commodities may be sold in malls.

In the related art, to facilitate selecting desired commodities by a user from a wide variety of commodities in a mall, the mall may usually provide a large screen to cyclically display details of all the commodities. The user may acquire the function of each commodity based on content displayed on the large screen.

### SUMMARY

To overcome problems existing in the related art, embodiments of the present disclosure provide a method for displaying a commodity and an apparatus for displaying a commodity. The technical solutions may be as follows.

According to a first aspect of embodiments of the present disclosure, a method for displaying a commodity is provided. The method may be applicable to a display terminal. The method includes: determining whether a positional relationship between the display terminal and a user terminal satisfies a predetermined condition; when the positional relationship satisfies the predetermined condition, acquiring purchase intention information of the user terminal, the purchase intention information including a commodity identifier of each of at least one commodity that a user intends to purchase; and displaying the at least one commodity based on the purchase intention information.

In one embodiment, determining whether the positional relationship satisfies the predetermined condition includes: acquiring a distance between the user terminal and the display terminal; and determining, based on the distance, whether the positional relationship satisfies the predetermined condition.

In one embodiment, determining based on the distance whether the positional relationship satisfies the predetermined condition includes: determining whether the distance is less than or equal to a first predetermined distance threshold; and when the distance is less than or equal to the first predetermined distance threshold, confirming that the positional relationship satisfies the predetermined condition.

In one embodiment, acquiring the distance between the user terminal and the display terminal includes: acquiring a current position of the user terminal from the user terminal; and acquiring the distance based on the current position of the user terminal and a position of the display terminal.

In one embodiment, determining whether the positional relationship satisfies the predetermined condition includes: determining whether the positional relationship satisfies a face recognition requirement; when the positional relationship satisfies the predetermined condition, acquiring the purchase intention information of the user terminal includes: when the positional relationship satisfies the face recognition requirement, acquiring the purchase intention information of the user terminal.

In one embodiment, acquiring the purchase intention information of the user terminal includes: acquiring a terminal identifier of the user terminal; sending a query message to a server based on the terminal identifier, the query message including the terminal identifier of the user terminal, such that the server acquires a search record or a shopping cart of the user terminal corresponding to the terminal identifier and acquires the purchase intention information of the user terminal based on the search record or the shopping cart; and receiving a feedback message from the server, the feedback message including the purchase intention information.

In one embodiment, the terminal identifier of the user terminal includes at least one of an account name of the user terminal for logging in a predetermined shopping website, a SIM (Subscriber Identification Module) card identifier of the user terminal, and feature information of a user who uses the user terminal.

According to a second aspect of embodiments of the present disclosure, an apparatus for displaying a commodity is provided. The apparatus is applicable to a display terminal. The apparatus includes: a determining module, configured to determine whether a positional relationship between the display terminal and a user terminal satisfies a predetermined condition; a first acquiring module, configured to, when the positional relationship satisfies the predetermined condition, acquire purchase intention information of the user terminal, the purchase intention information including a commodity identifier of each of at least one commodity that a user intends to purchase; and a displaying module, configured to display the at least one commodity based on the purchase intention information.

In one embodiment, the determining module includes: a first acquiring sub-module configured to acquire a distance between the user terminal and the display terminal; and a first determining sub-module configured to determine, based on the distance, whether the positional relationship satisfies the predetermined condition.

In one embodiment, the first determining sub-module includes: a determining unit configured to determine whether the distance is less than or equal to a first predetermined distance threshold; and a confirming unit configured to, when the distance is less than or equal to the first predetermined distance threshold, confirm that the positional relationship satisfies the predetermined condition.

In one embodiment, the first acquiring sub-module is configured to acquire a current position of the user terminal from the user terminal; and acquire the distance based on the current position of the user terminal and a position of the display terminal.

In one embodiment, the determining module includes: a second determining sub module configured to determine whether the positional relationship satisfies a face recognition requirement. The first acquiring module includes: a second acquiring sub module configured to, when the positional relationship satisfies the face recognition requirement, acquire the purchase intention information of the user terminal.

In one embodiment, the first acquiring module includes: a third acquiring sub-module, configured to acquire a terminal identifier of the user terminal; a sending sub-module, configured to send a query message to a server based on the terminal identifier, the query message including the terminal identifier of the user terminal, such that the server acquires a search record or a shopping cart of the user terminal corresponding to the terminal identifier and acquires the purchase intention information of the user terminal based on the search record or the shopping cart; and a receiving sub-module , configured to receive a feedback message from the server, the feedback message including the purchase intention information.

In one embodiment, the terminal identifier of the user terminal comprises at least one of an account name of the user terminal for logging in a predetermined shopping website, a SIM (Subscriber Identification Module) card identifier of the user terminal, and feature information of a user who uses the user terminal.

According to a third aspect of embodiments of the present disclosure, a computer readable storage medium is provided. The computer readable storage medium has stored therein computer instructions that, when executed by a processor of a display terminal, cause the display terminal to perform the any one of the above methods for displaying a commodity.

It is to be understood that both the foregoing general description and the following detailed description are exemplary and explanatory only and are not restrictive of the present disclosure, as claimed.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1a is a flow chart illustrating a method for displaying a commodity according to an exemplary embodiment of the present disclosure.
Fig. 1b is a schematic diagram illustrating a scenario according to an exemplary embodiment of the present disclosure.
Fig. 1c is a schematic diagram illustrating a scenario according to an exemplary embodiment of the present disclosure.
Fig. 2a is a flow chart illustrating a method for displaying a commodity according to an exemplary embodiment of the present disclosure.
Fig. 2b is a flow chart illustrating a method for displaying a commodity according to an exemplary embodiment of the present disclosure.
Fig. 3 is an interaction diagram illustrating a method for displaying a commodity according to an exemplary embodiment of the present disclosure.
Fig. 4 is an interaction diagram illustrating a method for displaying a commodity according to an exemplary embodiment of the present disclosure.
Fig. 5 is an interaction diagram illustrating a method for displaying a commodity according to an exemplary embodiment of the present disclosure.
Fig. 6a is a block diagram illustrating an apparatus for displaying a commodity according to an exemplary embodiment of the present disclosure.
Fig. 6b is a block diagram illustrating an apparatus for displaying a commodity according to an exemplary embodiment of the present disclosure.
Fig. 6c is a block diagram illustrating an apparatus for displaying a commodity according to an exemplary embodiment of the present disclosure.
Fig. 6d is a block diagram illustrating an apparatus for displaying a commodity according to an exemplary embodiment of the present disclosure.
Fig. 6e is a block diagram illustrating an apparatus for displaying a commodity according to an exemplary embodiment of the present disclosure.
Fig. 7a is a block diagram illustrating an apparatus for displaying a commodity according to an exemplary embodiment of the present disclosure.
Fig. 7b is a block diagram illustrating an apparatus for displaying a commodity according to an exemplary embodiment of the present disclosure.
Fig. 7c is a block diagram illustrating an apparatus for displaying a commodity according to an exemplary embodiment of the present disclosure.
Fig. 7d is a block diagram illustrating an apparatus for displaying a commodity according to an exemplary embodiment of the present disclosure.
Fig. 8 is a block diagram illustrating a device for displaying a commodity according to an exemplary embodiment of the present disclosure.

### DETAILED DESCRIPTION

Exemplary embodiments will be described in detail herein, examples of which are illustrated in the accompanying drawings. When the following description refers to the accompanying drawings, the same or similar elements may be denoted by the same number in different accompanying drawings, unless otherwise indicated. The embodiments described in the following exemplary embodiments do not represent all embodiments consistent with the present disclosure. Instead, they are merely examples of apparatus and methods consistent with aspects of the present disclosure as detailed in the appended claims.

The technical solutions provided in the embodiments of the present disclosure relate to a display terminal and a user terminal. The display terminal may be a display device including one or more screens. The display terminal may be disposed, e.g., in a mall or a shop. The display terminal is configured to display commodities sold by the mall or the shop. The user terminal may be a mobile phone, a tablet computer, a notebook computer, and other devices that may log in a shopping website or an application (APP) corresponding to the shopping website, which is not limited by the embodiments of the present disclosure. In the related art, the display terminal set by the shop may only display the commodities sold by the shop. If the shop sells more commodities, the user needs to watch the display terminal for a long period of time to acquire details of the commodity to be purchased, such that the user experience is poor. In the technical solutions provided in the embodiments of the present disclosure, the display terminal in the mall may display at least one commodity that the user who uses the user terminal intends to purchase, when a positional relationship between the display terminal and the user terminal satisfies a predetermined condition, thereby facilitating viewing the commodity that the user intends to purchase based on content displayed by the display terminal, solving the problem that the display terminal may not be personalized for the user, improving accuracy of displaying the commodity by the display terminal, and further improving user experience.

Embodiments of the present disclosure provide methods for displaying a commodity by a display terminal or a user terminal. Accordingly, two groups of embodiments are described below.

### Display terminal side

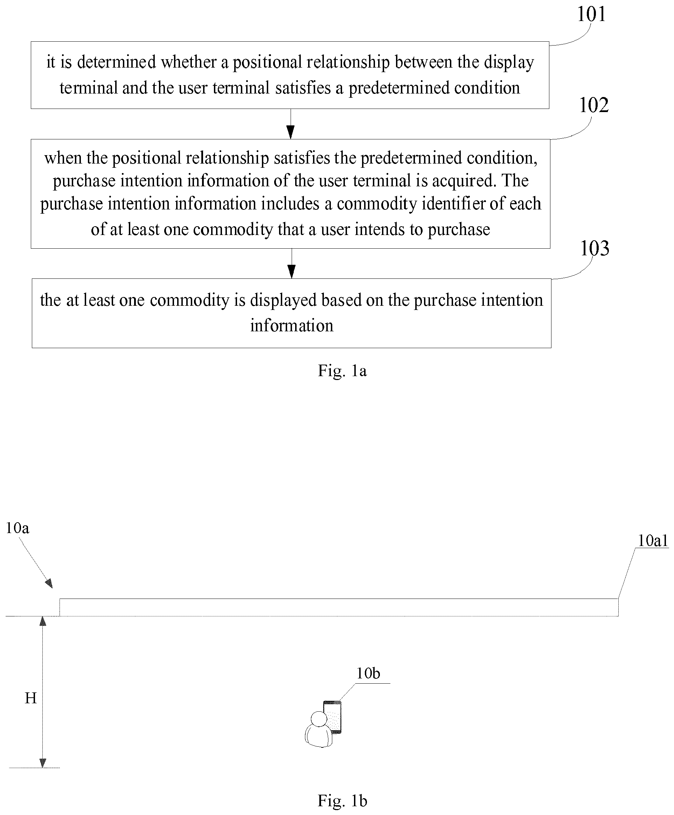

Fig. 1a is a flow chart illustrating a method for displaying a commodity according to an exemplary embodiment of the present disclosure. The method is applicable to the display terminal. As illustrated in Fig. 1a, the method includes operations in the following blocks 101 to 103.

At block 101, it is determined whether a positional relationship between the display terminal and the user terminal satisfies a predetermined condition.

For example, the user terminal may be a mobile phone, a tablet computer, or notebook computer, which is used by the user. The predetermined condition is configured to limit the positional relationship between the display terminal and the user terminal, such that the content displayed by the display terminal may be observed by the user who uses the user terminal, avoiding invalid displaying of the display terminal. For example, the display terminal may store a preset area. The preset area may be an optimal viewing area of the display terminal, or may be a user-defined area, which is not limited by the embodiments of the present disclosure. If a current position of the user terminal is within the preset area of the display terminal, the positional relationship between the display terminal and the user terminal satisfies the predetermined condition. If the current position of the user terminal is beyond the preset area of the display terminal, the positional relationship between the display terminal and the user terminal does not satisfy the predetermined condition.

In one embodiment, the user terminal may acquire the current position, for example, acquire the current position by using a GPS (Global Positioning System) module, and further acquire a map including the current position. The map identifies detailed information of the display terminals set by a plurality of shops or malls. The detailed information may include a position of the corresponding display terminal, and may further include a terminal identifier of the display terminal. The terminal identifier may be a network address of the display terminal. After acquiring the map, the user terminal may determine, based on the map, whether the positional relationship with the display terminal satisfies the predetermined condition. The display terminal may be a display terminal set by any one of the malls or shops identified on the map; or may also be a display terminal set by the mall or the shop, in which the corresponding mall or shop is the closest to the current position of the user terminal; or a display terminal set by the mall or the shop, in which the corresponding mall or shop is determined based on the user's instruction. The display terminal is not limited in the embodiments of the present disclosure.

For example, the display terminal may further determine a distance from the user terminal based on the current position of the user terminal, and then determine whether the positional relationship with the user terminal satisfies the predetermined condition based on the distance from the user terminal. Also for example, it is determined whether the positional relationship satisfies the predetermined condition based on a relationship between the distance of the display terminal and the user terminal and a first predetermined distance threshold. If the distance is less than or equal to the first predetermined distance threshold, the positional relationship satisfies the predetermined condition. If the distance is greater than the first predetermined distance threshold, the positional relationship does not satisfy the predetermined condition. For example, after acquiring the map including the current position and the detailed information of the display terminal, the user terminal may determine, based on the map, whether the distance from the display terminal is less than or equal to a second predetermined distance threshold. If the distance from the display terminal is less than or equal to the second predetermined distance threshold, the user who uses the user terminal may enter the shop corresponding to the display terminal to purchase the commodity. In order to facilitate the personalized displaying of the display terminal, the user terminal may acquire a terminal identifier of the display terminal in the detailed information of the display terminal on the map, and then acquire the current position of the user terminal based on a preset period or a moving speed, and send the position information to the display terminal based on the current position and the terminal identifier of the display terminal. The position information includes the current position of the user terminal. After acquiring the position information, the display terminal may determine, based on the current position of the user terminal and its own position, whether the distance from the user terminal is less than or equal to the first predetermined distance threshold. If the distance between the display terminal and the user terminal is less than or equal to the first predetermined distance threshold, it indicates that the distance between the user terminal and the display terminal is relatively close. That is, the user who uses the user terminal has entered the shop, and the content displayed by the display terminal may be observed by the user. If the distance between the display terminal and the user terminal is greater than the first predetermined distance threshold, it indicates that the user terminal is far away from the display terminal. That is, the user who uses the user terminal does not enter the shop, or the content displayed by the display terminal cannot be observed by the user temporarily.

In one embodiment, the display terminal is provided with a camera. The camera may capture an image of the viewing area. A face image of the user active in the viewing area is acquired based on the image of the viewing area. Since the camera generally needs to capture a relatively clear and complete face image when performing face recognition, the distance between the user terminal and the display terminal generally is also close. At this distance, the user may also observe the content displayed by the display terminal. So that the display terminal may also determine whether the positional relationship between the display terminal and the user terminal satisfies the predetermined condition by determining whether clarity and completeness of the face image meets a face recognition requirement. For example, the display terminal may determine whether the distance from the user terminal satisfies the face recognition requirement, i.e., whether face recognition is performed on the user who uses the user terminal. If the distance between the display terminal and the user terminal satisfies the face recognition requirement, i.e., the clarity and completeness of the face image of the user using the user terminal is relatively high to perform the face recognition, it indicates that the distance between the user terminal and the display terminal is relatively close, and the content displayed by the display terminal may be observed by the user who uses the user terminal. At this time, the positional relationship between the display terminal and the user terminal satisfies the predetermined condition. If the distance between the display terminal and the user terminal does not satisfy the face recognition requirement, i.e., the clarity and completeness of the face image of the user using the user terminal is relatively low, a face of the user cannot be recognized based on the face image. it indicates that the user terminal is far away from the display terminal, and the content displayed by the display terminal cannot be observed by the user who uses the user terminal. At this time, the positional relationship between the display terminal and the user terminal does not satisfy the predetermined condition.

At block 102, when the positional relationship satisfies the predetermined condition, purchase intention information of the user terminal is acquired. The purchase intention information includes a commodity identifier of each of at least one commodity that a user intends to purchase.

For example, if the positional relationship between the display terminal and the user terminal satisfies the predetermined condition, the distance between the display terminal and the user terminal is relatively close, and the display terminal may acquire the purchase intention information of the user terminal. It is convenient for displaying one or more commodities that the user intends to purchase in the purchase intention information.

In one embodiment, when the user terminal sends the position information to the display terminal, the terminal identifier of the user terminal may also be added to the position information. The terminal identifier may be an account name of the user terminal for logging in a predetermined shopping website, or a SIM (Subscriber Identification Module) card identifier of the user terminal, or feature information of the user who uses the user terminal, which is not limited in the embodiments of the present disclosure. One example is the account name of the user terminal for logging in the predetermined shopping website as the terminal identifier, i.e., the position information sent by the user terminal to the display terminal further includes the account name of the user terminal for logging in the predetermined shopping website. When the display terminal determines that the positional relationship with the user terminal satisfies the predetermined condition, a query message may be sent to a server based on the account name included in the position information. The query message includes the account name. The server may be a server of the predetermined shopping website. The server stores a search record or a shopping cart of each of different user terminals on the predetermined shopping website based on different account names. After acquiring the query message, the server may query the stored information based on the account name included in the query message, and acquire the search record or the shopping cart of the user terminal corresponding to the account name on the predetermined shopping website, and then acquire the purchase intention information of the user terminal corresponding to the account name based on the search record or the shopping cart. For example, the server may acquire a plurality of commodities involved in the search record, and select at least one commodity whose search count is greater than or equal to the predetermined threshold from the plurality of commodities, and determine the at least one commodity as the commodity that the user intends to purchase. The server may also acquire at least one commodity included in the shopping cart, and confirm the at least one commodity as the commodity that the user intends to purchase. After the server determines one or more commodities that the user intends to purchase based on the search record or the shopping cart, the server may acquire the commodity identifier of each of the one or more commodities, and then generate the purchase intention information based on the commodity identifier of each of the one or more commodities, and send the feedback message including the purchase intention information to the display terminal.

Another example is facial features of the user who uses the user terminal as the terminal identifier. The display terminal may capture an image of the viewing area through the camera, and acquire a face image of the user who is active in the viewing area based on the image of the viewing area. It is determined whether face recognition can be performed on the face image. If the face recognition can be performed on the face image, it indicates that the positional relationship between the display terminal and the user terminal satisfies the predetermined condition, and the display terminal may acquire the purchase intention information based on a face recognition result. In detail, the display terminal may acquire the face image and perform the face recognition on the face image to acquire facial feature information, and then send the query message based on the facial feature information. The query message includes the facial feature information. The server stores, based on the corresponding facial feature information of the plurality of users, search records or shopping carts of the plurality of user terminals on the predetermined shopping website. After acquiring the query message, the server may query the stored information based on the facial feature information included in the query message, and acquire a search record or a shopping cart of the user terminal corresponding to the facial feature information on the predetermined shopping website. Based on the search record or the shopping cart, the purchase intention information of the user terminal corresponding to the facial feature information is acquired. The process of acquiring the purchase intention information by the server may refer to the foregoing embodiment. After acquiring the purchase intention information, the server may send the feedback message including the purchase intention information to the display terminal.

In one embodiment, when the user terminal sends the position information to the display terminal, the user terminal may further carry the purchase intention information in the position information. For example, the user terminal is installed with an APP of the predetermined shopping website. The user who uses the user terminal may use the APP to browse commodities or purchase commodities. Therefore, the corresponding search record of the user exists in the APP, or, the shopping cart of the APP has at least one commodity that the user intends to purchase. When it is determined that the positional relationship with the display terminal satisfies the predetermined condition, the user terminal may acquire the current position in real time, and acquire the search record of the APP or the shopping cart of the APP, and acquire the purchase intention information based on the search record or the shopping cart, and generate the position information based on the current position and the purchase intention information, and send the position information to the display terminal based on the terminal identifier of the display terminal. For example, the user terminal may acquire a plurality of commodities in the search record, and select at least one commodity whose search count is greater than or equal to the predetermined number threshold from the plurality of commodities as the at least one commodity that the user intends to purchase. The user terminal may further acquire at least one commodity included in the shopping cart and confirm the at least one commodity as the at least one commodity that the user intends to purchase. After the user terminal determines one or more commodities that the user intends to purchase based on the search record or the shopping cart, the user terminal may acquire the commodity identifier of each of the one or more commodities, and then generate the purchase intention information based on the commodity identifier of each of the one or more commodities.

At block 103, the at least one commodity is displayed based on the purchase intention information.

For example, the display terminal is provided with one or more screens.

In one embodiment, illustrated in Fig. 1b, a display terminal 10a is provided with a screen 10a1. When the display terminal 10a determines that the distance from a user terminal 10b is less than or equal to the first predetermined distance threshold H, the display terminal 10a may acquire the purchase intention information of the user terminal 10b based on a terminal identifier of the user terminal 10b, i.e., acquire one or more commodities that the user intends to purchase, and then cyclically display the details of each of at least one commodity in the screen 10a1. The details include the appearance, model, function description and price, which are convenient for the user to select.

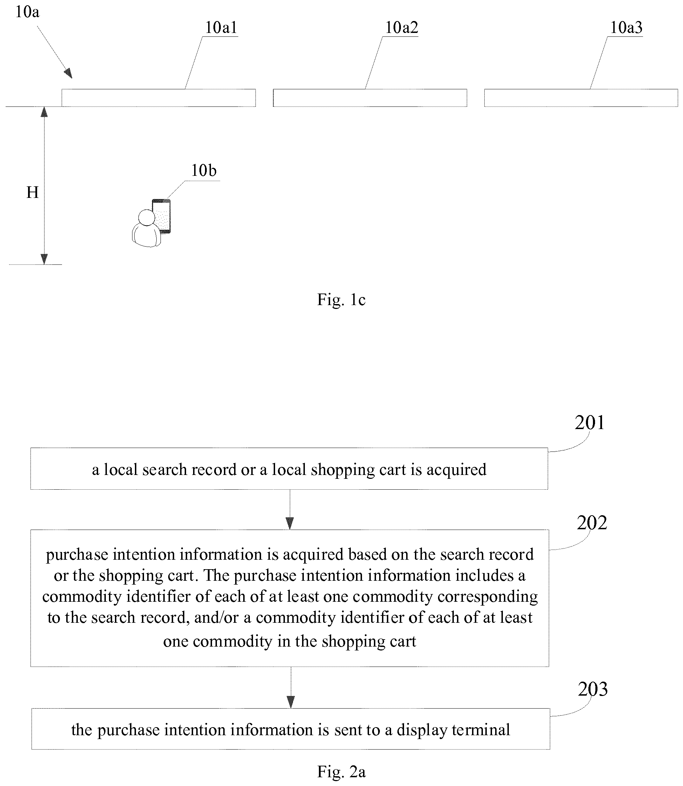

In one embodiment, illustrated in Fig. 1c, the display terminal 10a is provided with a plurality of screens. The plurality of screens may include a screen 10a1, a screen 10a2, and a screen 10a3. When the display terminal 10a determines that the distance between any one of the plurality of screens and the user terminal 10b is less than or equal to the first predetermined distance threshold H, for example, the distance between the screen 10a1 and the user terminal 10b is less than or equal to the first predetermined distance threshold H, the display terminal 10a may acquire the purchase intention information of the user terminal 10b based on the terminal identifier of the user terminal 10b, i.e., acquire one or more commodities that the user intends to purchase, and then display the details of one or more commodities on the plurality of screens, i.e., the details of one or more commodities are displayed on the screen 10a1, the screen 10a2, and the screen 10a3, respectively.

In one embodiment, there may be a case where a plurality of display terminals is set in the shop, and each display terminal may display commodities according to the method provided in the embodiments of the present disclosure.

In the technical solutions provided in the embodiments of the present disclosure, the display terminal in the mall may display the at least one commodity that the user who uses the user terminal intends to purchase, when the positional relationship between the display terminal and the user terminal satisfies the predetermined condition, thereby facilitating viewing the commodity that the user intends to purchase based on content displayed by the display terminal, solving the problem that the display terminal cannot be personalized for the user, improving accuracy of displaying the commodity by the display terminal, and further improving the user experience.

### User terminal side

Fig. 2a is a flow chart illustrating a method for displaying a commodity according to an exemplary embodiment of the present disclosure. The method is applicable to the user terminal. As illustrated in Fig. 2a, the method includes operations in the following blocks 201 to 203.

At block 201, a local search record or a local shopping cart is acquired.

For example, the user terminal is installed with an APP of a predetermined shopping website. The user who uses the user terminal may browse commodities or purchase commodities through the APP. The APP stores the search record of the user or the shopping cart of the user. When it is determined that the purchase intention information needs to be sent to the display terminal, the user terminal may acquire the search record of the APP or the shopping cart of the APP.

In one embodiment, the user may log in the shopping website through a browser set in the user terminal, and browse commodities or purchase commodities on the shopping website. The browser may record the search record of the user or the shopping cart of the user. When it is determined that the purchase intention information needs to be sent to the display terminal, the user terminal may acquire the search record or the shopping cart based on the information recorded by the browser.

At block 202, purchase intention information is acquired based on the search record or the shopping cart. The purchase intention information includes a commodity identifier of each of at least one commodity corresponding to the search record, and/or a commodity identifier of each of at least one commodity in the shopping cart.

For example, the user terminal may acquire a plurality of commodities involved in the search record, and then select at least one commodity whose search counts is greater than or equal to the predetermined number threshold from the plurality of commodities as the at least one commodity that the user intends to purchase. Also for example, the user terminal may acquire at least one commodity included in the shopping cart as the at least one commodity that the user intends to purchase. After acquiring, based on the search record and the shopping cart, the at least one commodity that the user intends to purchase, the user terminal may acquire the commodity identifier of each of the one or more commodities, and then generate the purchase intention information based on the commodity identifier of each of the one or more commodities.

At block 203, the purchase intention information is sent to a display terminal.

For example, the user terminal may determine the distance from the display terminal in real time. When the distance is smaller, the purchase intention information is sent to the display terminal by the user terminal. For example, the user terminal may acquire its position in real time, and acquire a map including the position. The map identifies details of the display terminals set in different shops or malls. The detail may include the position of the corresponding display terminal. The detail may further include the terminal identifier of the display terminal. The terminal identifier may be a network address of the display terminal. After acquiring the map, the user terminal may determine, based on the map, a distance between the current position and the display terminal. The display terminal may be a display terminal set by any one of the malls or shops identified on the map; or may also be a display terminal set by the mall or the shop, in which the corresponding mall or shop is the closest to the current position of the user terminal; or a display terminal set by the mall or the shop, in which the corresponding mall or shop is determined based on the user's instruction. The display terminal is not limited in the embodiments of the present disclosure. If the distance from the display terminal is less than or equal to the third predetermined distance threshold, the distance between the user terminal and the display terminal is relatively close. That is, the user who uses the user terminal has entered the shop, and the content displayed by the display terminal may be observed by the user. At this time, the user terminal may send the purchase intention information to the display terminal. Therefore, the display terminal may display one or more commodities corresponding to the commodity identifier included in the intention purchase information.

In one embodiment, the detailed information of the display terminal identified on the map may further include a network identifier of a wireless local area network corresponding to the display terminal. The network identifier may be a name of a Wi-Fi (Wireless Fidelity) included in the wireless local area network. The user terminal may determine, based on the map, whether the distance from the display terminal is less than or equal to the fourth predetermined distance threshold, and determine, in real time, whether it is connected to the wireless local area network when the distance from the display terminal is less than or equal to the fourth predetermined distance threshold. If the wireless local area network is currently connected, it is determined whether the network identifier of the connected wireless local area network is the same as the network identifier of the wireless local area network corresponding to the display terminal identified on the map. If the same, the distance between the user terminal and the display terminal is relatively close. That is, the user who uses the user terminal has entered the shop, and the content displayed by the display terminal may be observed by the user, and the user terminal may send the purchase intention information to the display terminal. Therefore, the display terminal may display one or more commodities corresponding to the commodity identifier included in the purchase intention information. If the network identifier of the connected wireless local area network is different with the network identifier of the wireless local area network corresponding to the display terminal identified on the map, the user terminal continues to detect whether it is connected to the wireless local area network.

In the technical solutions provided in the embodiments of the present disclosure may, the user terminal may send the purchase intention information based on the search record or the shopping cart of the user, such that the display terminal may display the commodity that the user intends to purchase, thereby solving the problem that the display terminal cannot be personalized for the user, improving accuracy of displaying the commodity by the display terminal, and further improving the user experience.

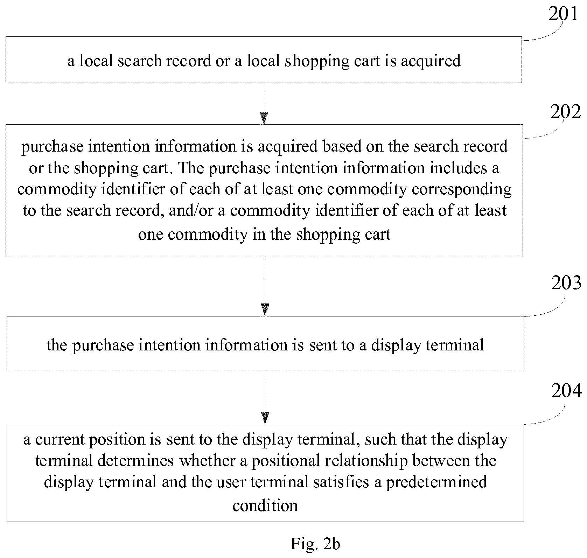

In one embodiment, illustrated in Fig. 2b, the method further includes an operation in block 204.

At block 204, a current position is sent to the display terminal, such that the display terminal determines whether a positional relationship between the display terminal and the user terminal satisfies a predetermined condition.

For example, the user terminal may also send the current position to the display terminal. After acquiring the current position of the user terminal, the display terminal may determine a positional relationship with the user terminal according to the current position, and acquire and display the purchase intention information of the user terminal when the positional relationship satisfies the predetermined condition.

In one embodiment, the user terminal may acquire its position in real time, and acquire a map including the position. The map identifies details of the display terminals set in different shops or malls. The detail may include the position of the corresponding display terminal. The detail may further include the terminal identifier of the display terminal. The terminal identifier may be a network address of the display terminal. After acquiring the map, the user terminal may determine, based on the map, a distance between the current position and the display terminal. If the distance is less than or equal to the second predetermined distance threshold, the user who uses the user terminal may enter the shop to purchase commodities. In order to facilitate the personalized displaying of the display terminal, the user terminal may acquire the terminal identifier of the display terminal from the detailed information of the display terminal identified on the map, and then send the current position based on the terminal identifier of the display terminal in real time or based on a preset period to the display terminal. The position information includes the current position acquired by the user terminal in real time.

In one embodiment, the detailed information of the display terminal identified on the map may further include a network identifier of a wireless local area network corresponding to the display terminal. The network identifier may be a name of a Wi-Fi (Wireless Fidelity) included in the wireless local area network. The user terminal may determine whether the user terminal is connected to the wireless local area network currently. If the user terminal is connected to the wireless local area network currently, it is determined whether the network identifier of the connected wireless local area network is the same as the network identifier of the wireless local area network corresponding to the display terminal identified on the map. If the same, the distance between the user terminal and the display terminal is relatively close. That is, the user who uses the user terminal has entered the shop, and the user terminal may send the position information to the display terminal. The position information includes the current position acquired by the user terminal in real time. It facilitates the display terminal to determine whether the positional relationship with the user terminal satisfies the predetermined condition based on the current position included in the position information. When the positional relationship satisfies the predetermined condition, the display terminal displays the plurality of commodities corresponding to the commodity identifiers included in the purchase intention information of the user terminal. If the network identifier of the connected wireless local area network is different with the network identifier of the wireless local area network corresponding to the display terminal identified on the map, the user terminal continues to detect whether it is connected to the wireless local area network.

In the technical solutions provided in the embodiments of the present disclosure, the user terminal may send the purchase intention information based on the search record or the shopping cart of the user, such that the display terminal may display the commodity that the user intends to purchase, thereby solving the problem that the display terminal cannot be personalized for the user, improving accuracy of displaying the commodity by the display terminal, and further improving the user experience.

The implementation process will be described in detail below through several embodiments.

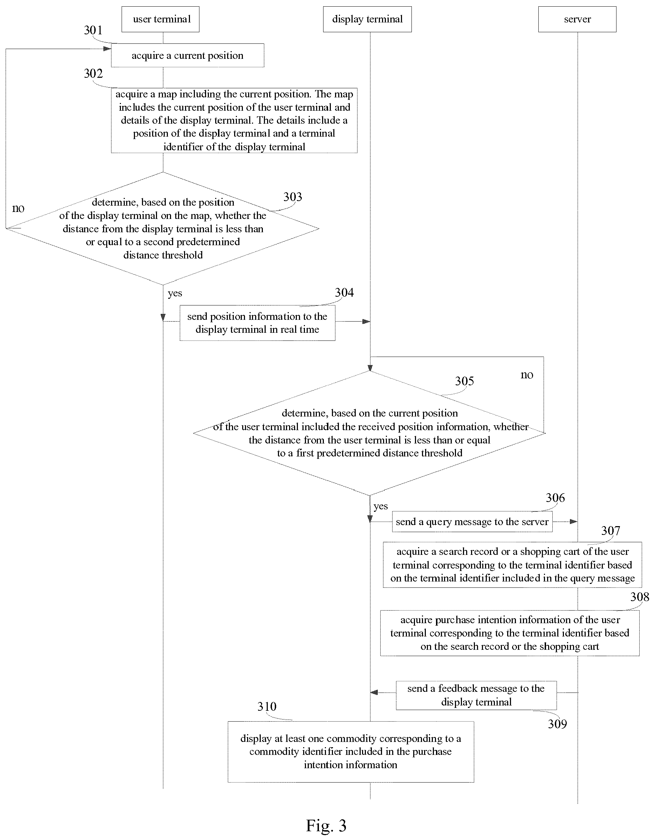

Fig. 3 is an interaction diagram illustrating a method for displaying a commodity according to an exemplary embodiment of the present disclosure. As illustrated in Fig. 3, the method includes operations in the following blocks 301 to 311.

At block 301, the user terminal acquires a current position.

At block 302, the user terminal acquires a map including the current position. The map includes the current position of the user terminal and details of the display terminal. The details include a position of the display terminal and a terminal identifier of the display terminal.

At block 303, the user terminal determines, based on the position of the display terminal on the map, whether the distance from the display terminal is less than or equal to a second predetermined distance threshold. If the distance from the display terminal is greater than the second predetermined distance threshold, the operation in block 301 is performed. If the distance from the display terminal is less than or equal to the second predetermined distance threshold, the operation in block 304 is performed.

At block 304, the user terminal sends position information to the display terminal in real time. The position information includes the current position acquired by the user terminal in real time and the terminal identifier of the user terminal.

At block 305, the display terminal determines, based on the current position of the user terminal included the received position information, whether the distance from the user terminal is less than or equal to a first predetermined distance threshold. If the distance from the user terminal is greater than the first predetermined distance threshold, the operation in block 305 is performed. If the distance from the user terminal is less than or equal to the first predetermined distance threshold, the operation in block 306 is performed.

At block 306, the display terminal sends a query message to the server based on the terminal identifier of the user terminal included in the position information.

At block 307, the server acquires a search record or a shopping cart of the user terminal corresponding to the terminal identifier based on the terminal identifier included in the query message.

At block 308, the server acquires purchase intention information of the user terminal corresponding to the terminal identifier based on the search record or the shopping cart.

At block 309, the server sends a feedback message to the display terminal based on the purchase intention information. The feedback message includes the purchase intention information.

At block 310, the display terminal displays at least one commodity corresponding to a commodity identifier included in the purchase intention information.

With the method for displaying a commodity provided in the embodiments of the present disclosure, the display terminal may acquire and display the at least one commodity that the user who uses the user terminal intends to purchase, when the distance from the user terminal is less than or equal to the first predetermined distance threshold, thereby facilitating viewing the commodity that the user intends to purchase based on content displayed by the display terminal, solving the problem that the display terminal cannot be personalized for the user, improving accuracy of displaying the commodity by the display terminal, and further improving the user experience.

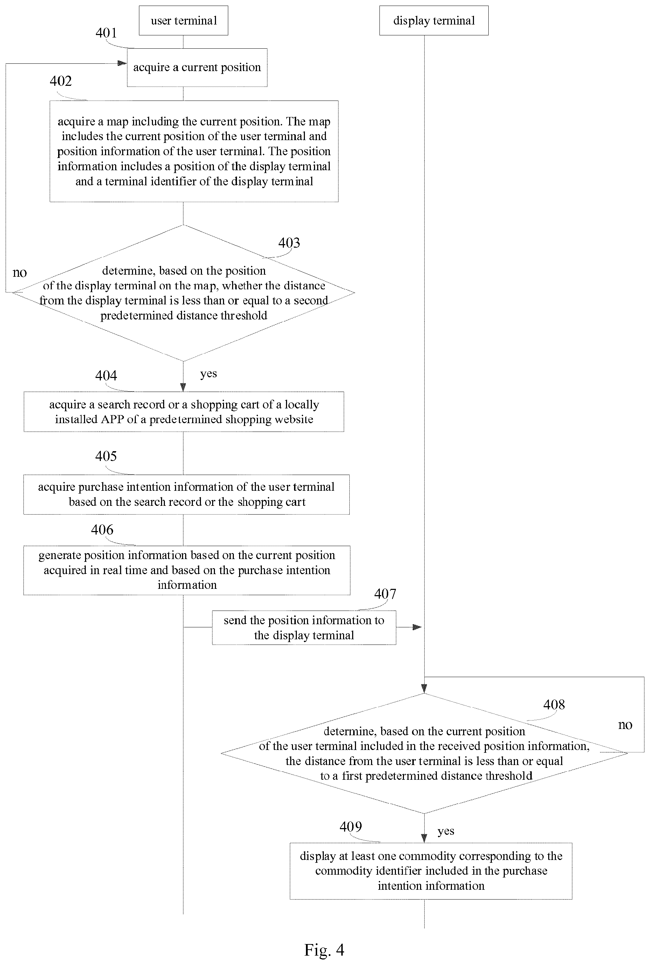

Fig. 4 is an interaction diagram illustrating a method for displaying a commodity according to an exemplary embodiment of the present disclosure. As illustrated in Fig. 4, the method includes operations in the following blocks 401 to 409.

At block 401, the user terminal acquires a current position.

At block 402, the user terminal acquires a map including the current position. The map includes the current position of the user terminal and position information of the user terminal. The position information includes a position of the display terminal and a terminal identifier of the display terminal.

At block 403, the user terminal determines, based on the position of the display terminal on the map, whether the distance from the display terminal is less than or equal to a second predetermined distance threshold. If the distance from the display terminal is greater than the second predetermined distance threshold, the operation in block 401 is performed. If the distance from the display terminal is less than or equal to the second predetermined distance threshold, the operation in block 404 is performed.

At block 404, the user terminal acquires a search record or a shopping cart of a locally installed APP of a predetermined shopping website.

At block 405, the user terminal acquires purchase intention information of the user terminal based on the search record or the shopping cart.

At block 406, the user terminal generates position information based on the current position acquired in real time and based on the purchase intention information.

At block 407, the user terminal sends the position information to the display terminal.

At block 408, the display terminal determines, based on the current position of the user terminal included in the received position information, the distance from the user terminal is less than or equal to a first predetermined distance threshold. If the distance from the user terminal is greater than the first predetermined distance threshold, the operation in block 408 is performed. If the distance from the user terminal is less than or equal to the first predetermined distance threshold, the operation in block 409 is performed.

At block 409, the display terminal displays at least one commodity corresponding to the commodity identifier included in the purchase intention information. The purchase intention information is included in the position information.

With the method for displaying a commodity provided in the embodiments of the present disclosure, the display terminal may display the at least one commodity that the user who uses the user terminal intends to purchase, when the distance from the user terminal is less than or equal to the first predetermined distance threshold, thereby facilitating viewing the commodity that the user intends to purchase based on content displayed by the display terminal, solving the problem that the display terminal cannot be personalized for the user, improving accuracy of displaying the commodity by the display terminal, and further improving the user experience.

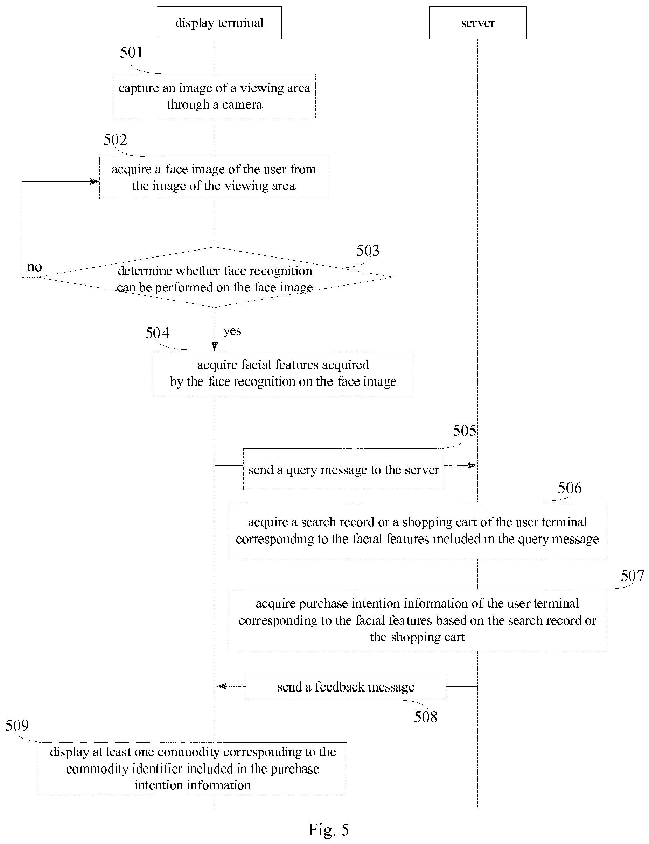

Fig. 5 is an interaction diagram illustrating a method for displaying a commodity according to an exemplary embodiment of the present disclosure. As illustrated in Fig. 5, the method includes operations in the following blocks 501 to 509.

At block 501, the display terminal captures an image of a viewing area through a camera.

At block 502, the display terminal acquires a face image of the user from the image of the viewing area.

At block 503, the display terminal determines whether face recognition can be performed on the face image. If the face recognition cannot be performed on the face image, the operation in block 501 is performed. If the face recognition can be performed on the face image, the operation in block 504 is performed.

At block 504, the display terminal acquires facial features acquired by the face recognition on the face image.

At block 505, the display terminal sends a query message to the server based on the facial features. The query message includes the facial features.

At block 506, the server acquires a search record or a shopping cart of the user terminal corresponding to the facial features included in the query message.

At block 507, the server acquires purchase intention information of the user terminal corresponding to the facial features based on the search record or the shopping cart.

At block 508, the server sends a feedback message based on the purchase intention information. The feedback message includes the purchase intention information.

At block 509, the display terminal displays at least one commodity corresponding to the commodity identifier included in the purchase intention information.

With the method for displaying a commodity provided in the embodiments of the present disclosure, the display terminal may acquire and display the at least one commodity that the user who uses the user terminal intends to purchase, based on the facial features, thereby facilitating viewing the commodity that the user intends to purchase based on content displayed by the display terminal, solving the problem that the display terminal cannot be personalized for the user, improving accuracy of displaying the commodity by the display terminal, and further improving the user experience.

The following is an apparatus embodiment of the present disclosure, which may be configured to implement the method embodiments of the present disclosure.

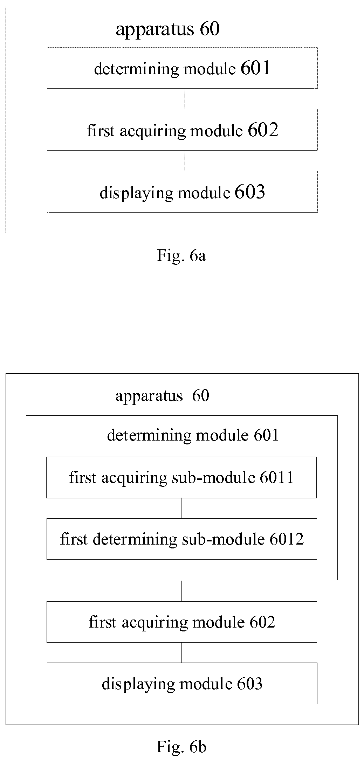

Fig. 6a is a block diagram illustrating an apparatus 60 for displaying a commodity according to an exemplary embodiment of the present disclosure. The apparatus 60 may be implemented as part or all of an electronic device by software, hardware, or a combination of both. As illustrated in Fig. 6a, the apparatus 60 may include a determining module 601, a first acquiring module 602 and a displaying module 603.

The determining module 601 is configured to determine whether a positional relationship between a display terminal and a user terminal satisfies a predetermined condition.

The first acquiring module 602 is configured to, when the positional relationship satisfies the predetermined condition, acquire purchase intention information of the user terminal. The purchase intention information includes a commodity identifier of each of at least one commodity that a user intends to purchase.

The displaying module 603 is configured to display the at least one commodity based on the purchase intention information.

In one embodiment, illustrated in Fig. 6b, the determining module 601 includes a first acquiring sub-module 6011 and a first determining sub-module 6012.

The first acquiring sub-module 6011 is configured to acquire a distance between the user terminal and the display terminal.

The first determining sub-module 6012 is configured to determine, based on the distance, whether the positional relationship satisfies the predetermined condition.

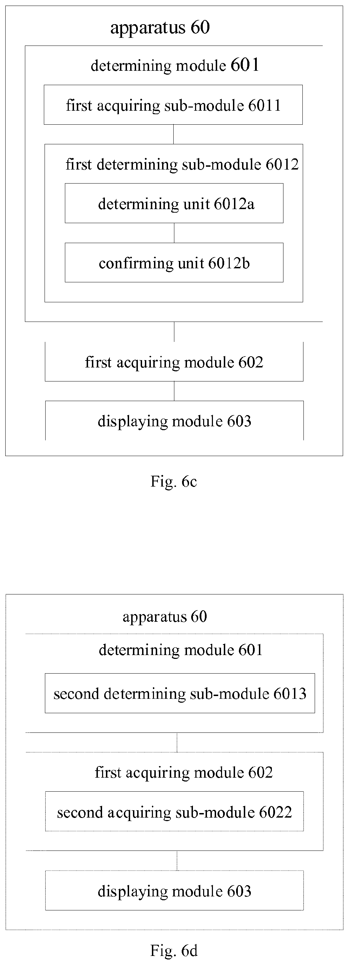

In one embodiment, illustrated in Fig. 6c, the first determining sub-module 6012 includes a determining unit 6012a and a confirming unit 6012b.

The determining unit 6012a is configured to determine whether the distance is less than or equal to a first predetermined distance threshold.

The confirming unit 6012b is configured to, when the distance is less than or equal to the first predetermined distance threshold, confirm that the positional relationship satisfies the predetermined condition.

In one embodiment, illustrated in Fig. 6d, the determining module 601 includes a second determining sub-module 6013, and the first acquiring module 602 includes a second acquiring sub-module 6022.

The second determining sub-module 6013 is configured to determine whether the positional relationship satisfies a face recognition requirement.

The second acquiring sub-module 6022 is configured to, when the positional relationship satisfies the face recognition requirement, acquire the purchase intention information of the user terminal.

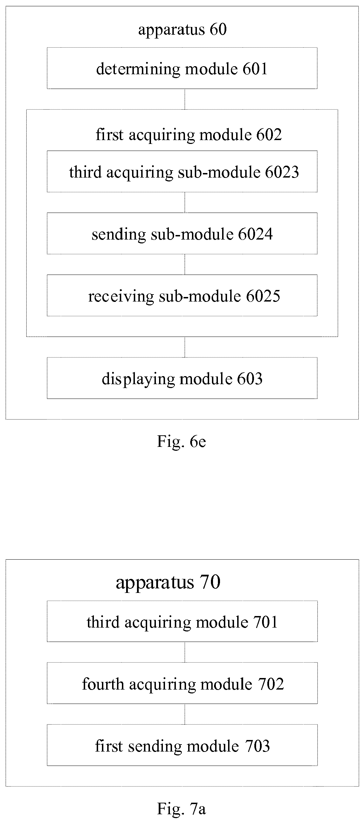

In one embodiment, illustrated in Fig. 6e, the first acquiring module 602 includes a third acquiring sub-module 6023, a sending sub-module 6024, and a receiving sub-module 6025.

The third acquiring sub-module 6023 is configured to acquire a terminal identifier of the user terminal.

The sending sub-module 6024 is configured to send a query message to a server based on the terminal identifier. The query message includes the terminal identifier of the user terminal, such that the server acquires a search record or a shopping cart of the user terminal corresponding to the terminal identifier and acquires the purchase intention information of the user terminal based on the search record or the shopping cart.

The receiving sub-module 6025 is configured to receive a feedback message from the server, the feedback message including the purchase intention information.

With the apparatus for displaying a commodity provided in the embodiments of the present disclosure, the apparatus may display the at least one commodity that the user who uses the user terminal intends to purchase, when the positional relationship between the display terminal and the user terminal satisfies the predetermined condition, thereby facilitating the user to view the commodity that he/she intends to purchase based on content displayed by the display terminal, solving the problem that the display terminal cannot be personalized for the user, improving accuracy of displaying the commodity by the display terminal, and further improving the user experience.

Fig. 7a is a block diagram illustrating an apparatus 70 for displaying a commodity according to an exemplary embodiment of the present disclosure. The apparatus 70 may be implemented as part or all of an electronic device by software, hardware, or a combination of both. As illustrated in Fig. 7a, the apparatus 70 may include a third acquiring module 701, a fourth acquiring module 702, and a first sending module 703.

The third acquiring module 701 is configured to acquire a local search record or a local shopping cart.

The fourth acquiring module 702 is configured to acquire purchase intention information based on the search record or the shopping cart. The purchase intention information includes a commodity identifier of each of at least one commodity corresponding to the search record, and/or, a commodity identifier of each of at least one commodity in the shopping cart.

The first sending module 703 is configured to send the purchase intention information to a display terminal.

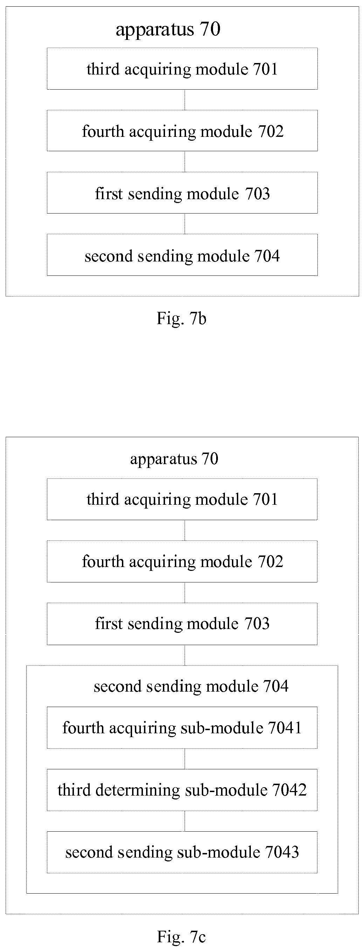

In one embodiment, illustrated in Fig. 7b, the apparatus 70 further includes a second sending module 704. The second sending module 704 is configured to send a current position to the display terminal, such that the display terminal determines whether a positional relationship between the display terminal and the user terminal satisfies a predetermined condition.

In one embodiment, illustrated in Fig. 7c, the second sending module 704 includes a fourth acquiring sub-module 7041, a third determining sub-module 7042, and a second sending sub-module 7043.

The fourth acquiring sub-module 7041 is configured to acquire a map including the current position of the user terminal and a position of the display terminal.

The third determining sub-module 7042 is configured to determine, based on the map, whether a distance between the user terminal and the display terminal is less than or equal to a second predetermined distance threshold.

The second sending sub-module 7043 is configured to, when the distance is less than or equal to the second predetermined distance threshold, send the current position to the display terminal.

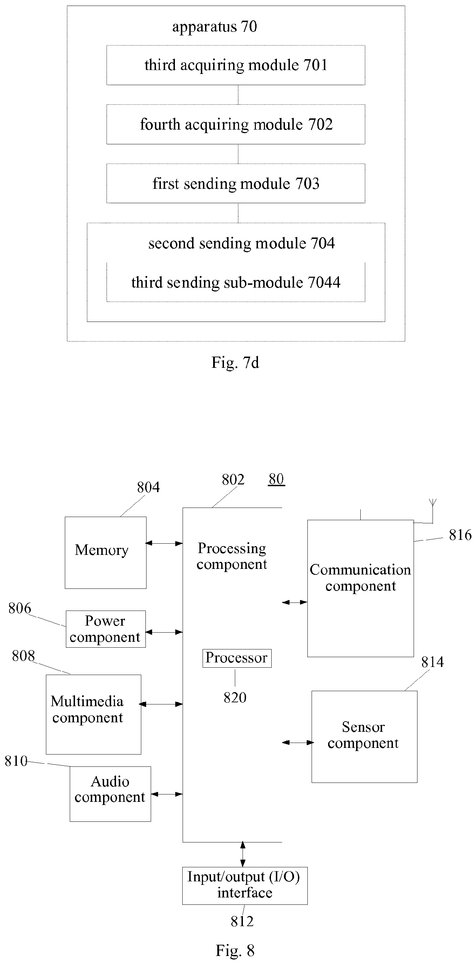

In one embodiment, illustrated in Fig. 7d, the second sending module 704 includes a third sending sub-module 7044. The third sending sub-module 7044 is configured to, when establishing a connection with a wireless local area network corresponding to the display terminal, send the current position to the display terminal.

With the apparatus for displaying a commodity provided in the embodiments of the present disclosure, the apparatus may send the purchase intention information based on the search record or the shopping cart of the user, such that the display terminal may display the commodity that the user intends to purchase, thereby solving the problem that the display terminal cannot be personalized for the user, improving accuracy of displaying the commodity by the display terminal, and further improving the user experience.

The embodiments of the present disclosure provide a device for displaying a commodity. The device includes: a first processor; and a first memory configured to store instructions executable by the first processor.

The first processor is configured to perform: determining whether a positional relationship between a display terminal and a user terminal satisfies a predetermined condition; when the positional relationship satisfies the predetermined condition, acquiring purchase intention information of the user terminal, the purchase intention information including a commodity identifier of each of at least one commodity that a user intends to purchase; and displaying the at least one commodity based on the purchase intention information.

In one embodiment, the first processor is configured to perform: acquiring a distance between the user terminal and the display terminal; and determining, based on the distance, whether the positional relationship satisfies the predetermined condition.

In one embodiment, the first processor is configured to perform: determining whether the distance is less than or equal to a first predetermined distance threshold; and when the distance is less than or equal to the first predetermined distance threshold, confirming that the positional relationship satisfies the predetermined condition.

In one embodiment, the first processor is configured to perform: determining whether the positional relationship satisfies a face recognition requirement; when the positional relationship satisfies the face recognition requirement, acquiring the purchase intention information of the user terminal.

In one embodiment, the first processor is configured to perform: acquiring a terminal identifier of the user terminal; sending a query message to a server based on the terminal identifier, the query message including the terminal identifier of the user terminal, such that the server acquires a search record or a shopping cart of the user terminal corresponding to the terminal identifier and acquires the purchase intention information of the user terminal based on the search record or the shopping cart; and receiving a feedback message from the server, the feedback message including the purchase intention information.

With the device for displaying a commodity provided in the embodiments of the present disclosure, the device may acquire and display the at least one commodity that the user who uses the user terminal intends to purchase, when the positional relationship between the display terminal and the user terminal satisfies the predetermined condition, thereby facilitating the user to view the commodity that he/she intends to purchase based on content displayed by the display terminal, solving the problem that the display terminal cannot be personalized for the user, improving accuracy of displaying the commodity by the display terminal, and further improving the user experience.

The embodiments of the present disclosure provide a device for displaying a commodity. The device includes: a second processor; and a second memory configured to store instructions executable by the second processor.

The second processor is configured to perform: acquiring a local search record or a local shopping cart; acquiring purchase intention information based on the search record or the shopping cart, the purchase intention information including a commodity identifier of each of at least one commodity corresponding to the search record, and/or a commodity identifier of each of at least one commodity in the shopping cart; and sending the purchase intention information to a display terminal.

In one embodiment, the second processor is configured to perform: sending a current position to the display terminal, such that the display terminal determines whether a positional relationship between the display terminal and the user terminal satisfies a predetermined condition.

In one embodiment, the second processor is configured to perform: acquiring a map including the current position of the user terminal and a position of the display terminal; determining, based on the map, whether a distance between the user terminal and the display terminal is less than or equal to a second predetermined distance threshold; when the distance is less than or equal to the second predetermined distance threshold, sending the current position to the display terminal.

In one embodiment, the second processor is configured to perform: when establishing a connection with a wireless local area network corresponding to the display terminal, sending the current position to the display terminal.

With the device for displaying a commodity provided in the embodiments of the present disclosure, the device may send the purchase intention information based on the search record or the shopping cart of the user, such that the display terminal may display the commodity that the user intends to purchase, thereby solving the problem that the display terminal cannot be personalized for the user, improving accuracy of displaying the commodity by the display terminal, and further improving the user experience.

Detailed implementations of functions and actions of above units in the above devices may be referred to those implementations of blocks in above methods, which are not elaborated herein.

Fig. 8 is a block diagram illustrating a device 80 for displaying a commodity according to an exemplary embodiment of the present disclosure. The device 80 is a terminal device. For example, the device 80 may be a mobile phone, a computer, a digital broadcasting terminal, a message sending and receiving equipment, a game controller, a tablet device, a medical device, a fitness equipment, a personal digital assistant or the like.

The device 80 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 80, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 80. Examples of such data include instructions for any applications or methods operated on the device 80, contaction data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 80. The power component 806 may include a power management system, one or more power sources, and any other components associated with the generation, management, and distribution of power in the device 80.

The multimedia component 808 includes a screen providing an output interface between the device 80 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the device 80 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 80 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 80. For instance, the sensor component 814 may detect an open/closed status of the device 80, relative positioning of components, e.g., the display and the keypad, of the device 80, a change in position of the device 80 or a component of the device 80, a presence or absence of user contaction with the device 80, an orientation or an acceleration/deceleration of the device 80, and a change in temperature of the device 80. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 80 and other devices. The device 80 can access a wireless network based on a communication standard, such as Wi-Fi, 2G, or 30, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In one or more exemplary embodiments, the device 80 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the device 80, for performing the above-described methods. For example, the non-transitory computer-readable storage medium may be a ROM, a RAM, a CD-ROM, a magnetic tape, a floppy disc, an optical data storage device, and the like.

The embodiments of the present disclosure provide a non-transitory computer-readable storage medium. When instructions stored in the storage medium are executed by a processor of a display terminal, it causes the display terminal to perform the above method for displaying a commodity. The method includes: determining whether a positional relationship between the display terminal and a user terminal satisfies a predetermined condition; when the positional relationship satisfies the predetermined condition, acquiring purchase intention information of the user terminal, the purchase intention information including a commodity identifier of each of at least one commodity that a user intends to purchase; and displaying the at least one commodity based on the purchase intention information.

In one embodiment, determining whether the positional relationship satisfies the predetermined condition, includes: acquiring a distance between the user terminal and the display terminal; and determining, based on the distance, whether the positional relationship satisfies the predetermined condition.

In one embodiment, determining based on the distance whether the positional relationship satisfies the predetermined condition, includes: determining whether the distance is less than or equal to a first predetermined distance threshold; and when the distance is less than or equal to the first predetermined distance threshold, confirming that the positional relationship satisfies the predetermined condition.

In one embodiment, determining whether the positional relationship satisfies the predetermined condition, includes: determining whether the positional relationship satisfies a face recognition requirement. When the positional relationship satisfies the predetermined condition, acquiring the purchase intention information of the user terminal, includes: when the positional relationship satisfies the face recognition requirement, acquiring the purchase intention information of the user terminal.

In one embodiment, acquiring the purchase intention information of the user terminal, includes: acquiring a terminal identifier of the user terminal; sending a query message to a server based on the terminal identifier, the query message including the terminal identifier of the user terminal, such that the server acquires a search record or a shopping cart of the user terminal corresponding to the terminal identifier and acquires the purchase intention information of the user terminal based on the search record or the shopping cart; and receiving a feedback message from the server, the feedback message including the purchase intention information.

The embodiments of the present disclosure provide a non-transitory computer-readable storage medium. When instructions stored in the storage medium are executed by a processor of a device 80, it causes the device 80 to performs the above method for displaying a commodity. The method includes: acquiring a local search record or a local shopping cart; acquiring purchase intention information based on the search record or the shopping cart, the purchase intention information including a commodity identifier of each of at least one commodity corresponding to the search record, and/or, a commodity identifier of each of at least one commodity in the shopping cart; and sending the purchase intention information to a display terminal.

In one embodiment, the method includes: sending a current position to the display terminal, such that the display terminal determines whether a positional relationship between the display terminal and the user terminal satisfies a predetermined condition.

In one embodiment, sending the current position to the display terminal, includes: acquiring a map including the current position of the user terminal and a position of the display terminal; determining, based on the map, whether a distance between the user terminal and the display terminal is less than or equal to a second predetermined distance threshold; when the distance is less than or equal to the second predetermined distance threshold, sending the current position to the display terminal.

In one embodiment, sending the current position to the display terminal, includes: when establishing a connection with a wireless local area network corresponding to the display terminal, sending the current position to the display terminal.

Other embodiments of the present disclosure will be apparent to those skilled in the art from consideration of the specification and practice of the present disclosure disclosed here. This application is intended to cover any variations, uses, or adaptations of the present disclosure following the general principles thereof and including such departures from the present disclosure as come within known or customary practice in the art.

## Claims

1. A method for displaying a commodity comprising:
determining whether a positional relationship between a display terminal and a user terminal satisfies a predetermined condition;
when the positional relationship satisfies the predetermined condition, acquiring purchase intention information of the user terminal, the purchase intention information including a commodity identifier of each of at least one commodity that a user intends to purchase; and
displaying the at least one commodity based on the purchase intention information.

2. The method of claim 1, wherein determining whether the positional relationship satisfies the predetermined condition comprises:
acquiring a distance between the user terminal and the display terminal; and
determining, based on the distance, whether the positional relationship satisfies the predetermined condition.

3. The method of claim 2, wherein determining based on the distance whether the positional relationship satisfies the predetermined condition comprises:
determining whether the distance is less than or equal to a first predetermined distance threshold; and
when the distance is less than or equal to the first predetermined distance threshold, confirming that the positional relationship satisfies the predetermined condition.

4. The method of claim 2 or 3, wherein acquiring the distance between the user terminal and the display terminal comprises:
acquiring a current position of the user terminal from the user terminal; and
acquiring the distance based on the current position of the user terminal and a position of the display terminal.

5. The method of any one of claims 1 to 4,
wherein determining whether the positional relationship satisfies the predetermined condition, comprises:
determining whether the positional relationship satisfies a face recognition requirement; and
wherein when the positional relationship satisfies the predetermined condition, acquiring the purchase intention information of the user terminal comprises:
when the positional relationship satisfies the face recognition requirement, acquiring the purchase intention information of the user terminal.

6. The method of any one of claims 1 to 5, wherein acquiring the purchase intention information of the user terminal comprises:
acquiring a terminal identifier of the user terminal;
sending a query message to a server based on the terminal identifier, the query message including the terminal identifier of the user terminal, such that the server acquires a search record or a shopping cart of the user terminal corresponding to the terminal identifier and acquires the purchase intention information of the user terminal based on the search record or the shopping cart; and
receiving a feedback message from the server, the feedback message including the purchase intention information.

7. The method of claim 6, wherein the terminal identifier of the user terminal comprises at least one of an account name of the user terminal for logging in a predetermined shopping website, a SIM (Subscriber Identification Module) card identifier of the user terminal, and feature information of a user who uses the user terminal.

8. An apparatus (60) for displaying a commodity, applicable to a display terminal, comprising:
a determining module (601), configured to determine whether a positional relationship between the display terminal and a user terminal satisfies a predetermined condition;
a first acquiring module (602), configured to, when the positional relationship satisfies the predetermined condition, acquire purchase intention information of the user terminal, the purchase intention information including a commodity identifier of each of at least one commodity that a user intends to purchase; and
a displaying module (603), configured to display the at least one commodity based on the purchase intention information.

9. The apparatus (60) of claim 8, wherein the determining module (601) comprises:
a first acquiring sub-module (6011), configured to acquire a distance between the user terminal and the display terminal; and
a first determining sub-module (6012), configured to determine, based on the distance, whether the positional relationship satisfies the predetermined condition.

10. The apparatus (60) of claim 9, wherein the first determining sub-module (6012) comprises:
a determining unit (6012a), configured to determine whether the distance is less than or equal to a first predetermined distance threshold; and
a confirming unit (6012b), configured to, when the distance is less than or equal to the first predetermined distance threshold, confirm that the positional relationship satisfies the predetermined condition.

11. The apparatus (60) of claim 9 or 10, wherein the first acquiring sub-module (6011) is configured to acquire a current position of the user terminal from the user terminal; and acquire the distance based on the current position of the user terminal and a position of the display terminal.

12. The apparatus (60) of any one of claims 8 to 11,
the determining module (601) comprises: a second determining sub module (6013), configured to determine whether the positional relationship satisfies a face recognition requirement; and
the first acquiring module (602) comprises: a second acquiring sub module (6022), configured to, when the positional relationship satisfies the face recognition requirement, acquire the purchase intention information of the user terminal.

13. The apparatus (60) of any one of claims 8 to 12, wherein the first acquiring module (602) comprises:
a third acquiring sub-module (6023), configured to acquire a terminal identifier of the user terminal;
a sending sub-module (6024), configured to send a query message to a server based on the terminal identifier, the query message including the terminal identifier of the user terminal, such that the server acquires a search record or a shopping cart of the user terminal corresponding to the terminal identifier and acquires the purchase intention information of the user terminal based on the search record or the shopping cart; and
a receiving sub-module (6025), configured to receive a feedback message from the server, the feedback message including the purchase intention information.

14. The apparatus (60) of claim 13, wherein the terminal identifier of the user terminal comprises at least one of an account name of the user terminal for logging in a predetermined shopping website, a SIM (Subscriber Identification Module) card identifier of the user terminal, and feature information of a user who uses the user terminal.

15. A computer readable storage medium having stored therein computer instructions that, when executed by a processor of a display terminal, cause the display terminal to perform the method for displaying a commodity according to any one of claims 1 to 7.
